Europäisches Patentamt

European Patent Office

Office européen des brevets

(11) Publication number: **0 081 252**
**B1**

(12) **EUROPEAN PATENT SPECIFICATION**

(45) Date of publication of patent specification: **26.03.86**

(51) Int. Cl.⁴: **F 16 B 13/14, F 16 B 13/00**

(21) Application number: **82201351.2**

(22) Date of filing: **29.10.82**

(54) An anchoring fastener adapted to be fixed by adhesive in concrete, stonelike material and wood.

(30) Priority: **01.12.81 NL 8105432**

(43) Date of publication of application:
**15.06.83 Bulletin 83/24**

(45) Publication of the grant of the patent:
**26.03.86 Bulletin 86/13**

(84) Designated Contracting States:
**AT BE CH DE FR GB IT LI LU NL SE**

(56) References cited:
**DE-A-2 453 713**
**GB-A-2 006 369**

**ENGINEERING AND MINING JOURNAL, vol. 177, no. 6, June 1976, pages 163-166; "Ground control: improved support and monitoring systems".**
**ENGINEERING AND MINING JOURNAL.**

(73) Proprietor: **Simatec B.V.**
**Industriepark 1b**
**NL-2421 LE Nieuwkoop (NL)**

(72) Inventor: **Keller, Hans Onno**
**Chrysantenstraat 36**
**NL-2431 XL Noorden (NL)**

(74) Representative: **den Boer, Jan Johannes, Ir.**
**Octrooibureau Polak & Charlouis Laan Copes van Cattenburch 80**
**NL-2585 GD The Hague (NL)**

Courier Press, Leamington Spa, England.

# Description

The invention relates to an anchoring fastener adapted to be connected to a carrier material, e.g. concrete, a different stone-like material or wood, by means of a two-component adhesive, said fastener comprising a shank having a plurality of circumferential collars with lateral sides parallel to the shank.

Such fasteners are generally known. A hole is drilled in the carrier material, filled with a two-component adhesive and thereafter the fastener shank is driven in. After curing of the adhesive the connection between the carrier material and the fastener shank has been established.

Such fasteners serve to connect building parts to a concrete or masonary structure. Since such connection often is provided by means of screw thread and nuts the anchor shank of a certain type of prior art anchoring fasteners is in the embodiment of a so-called screw spindle, the screw thread of which extends along the full length thereof. A disadvantage is that the adhesive does not fill with certainty all valleys of the screwthread, so that the adhesive connection between adhesive and shank is not optimal and thereby likewise the shear strength between shank and adhesive is not optimal when the fastener is loaded by tension forces. Furthermore the rather sharp crests of the screw thread cause the occurrence of load peaks when loaded.

The invention aims at removing the disadvantages of the known fasteners and at providing an anchoring fastener to be connected through adhesive, which has a stronger connection with the carrier material and thereby a larger holding force.

This is achieved according to the invention in that the lateral sides of the collars are connected to the shank by portions extending at an obtuse angle with the adjacent shank periphery and merging through a radius with the collar periphery and with the shank periphery, a group of collars being provided at each end of the shank portion, which is to be fixed by the adhesive, the spacing between the innermost collars of said respective groups being greater than the spacing between successive collars in said groups.

Thereby a favourable stress distribution is obtained in the adhesive layer such that the largest possible portion thereof cooperates in transmitting the stresses to the hole wall.

From GB—A—2,006,369 a fastener is known having collars which have lateral sides extending perpendicular to the shank axis. Therewith likewise no correct filling of the corners of the perpendicular angles is obtained between the shank surface and the adhesive. When the fastener is loaded by tensile force, load transmission is therefore not substantially equal through all collars. Such equal load distribution is further promoted by the large intermediate shank portion between the groups of collars at ends of the shank, since the continuous adhesive portion present at that long intermediate stretch absorbs creep in the adhesive layer due to prolonged static loading.

The value of the obtuse angle made by the lateral sides of the collars depends on the hole diameter and therefore on the thickness of the adhesive layer between the fastener and the holewall. Said angle must be larger with a thicker adhesive layer and also when a larger dynamic transverse loading of the fastener occurs. Said last mentioned fact e.g. occurs with anchoring fasteners which are used for securing railway rail plates to concrete sleepers.

The above mentioned collar radiuses serve to avoid stress peaks in the adhesive layer. The radius preferably is larger when the adhesive layer is thicker.

If the fasteners mainly receive tension loads in close fitting holes, i.e. holes, having in known manner a diameter, which is about 2 mms larger than the fastener shank, the circumferential collars according to the invention are provided such that the ratio between the axial length of the circumferential collars and the axial length of the shank portion between two successive collars equals the ratio of the shear strength of the adhesive layer to that of the shank material. Thereby the shear strength of the connection between adhesive and shank in the adhesive between two collars, is substantially equal to that of the collars themselves, so that the shear strength is equally distributed through the full length of the fastener.

It is known to have a hole diameter which is substantially 2 mms larger than the exterior diameter of the screw thread portion, in order to have a sufficient amount of adhesive available in the drilled hole for the adhesive connection between the adhesive and the holewall, so that an adhesive layer with a thickness of 1 mm surrounds the fastener shank. A larger hole diameter is not necessary and would increase the cost of the adhesive material.

Preferably an embodiment of the fastener according to the invention has a collar such that it extends along a distance of about 1 mm beyond the shank periphery. Thereby an adhesive layer of likewise 1 mm thickness is provided between the collar and the holewall. For larger holes the rule may be generally observed that the extending distance should be equal to half the thickness of the adhesive layer.

A correct stress distribution along the full adhesive layer thickness between the fastener and the carrier material, when using holes having a 2 mms larger diameter than the shanks, is obtained if the lateral sides of the collars include an angle of 105° with the adjacent shank periphery.

With the usual thickness of the adhesive layer stress peaks in the corners between the smooth fastener shank and the collars is avoided if the radius between the collar periphery and the lateral collar side, as well as between the lateral collar side and the shank periphery is 0.3 mms.

It is to be preferred to provide the fastener and its inserting end with a conical contour having a top angle of about 120°, by which the fastener is inserted into a narrow hole filled with adhesive. Thereby, when inserting the fastener in the hole filled with adhesive the trapping of air is avoided.

The invention will hereunder be illustrated with reference to the drawing showing two embodiments of the anchoring fastener according to the invention, given as examples.

Fig. 1 is a side view of a fastener suitable for narrow holes.

Fig. 2 shows the detail of Fig. 1 indicated by II on an enlarged scale and in section.

Fig. 3 is a side view of an anchoring fastener for rail connector.

Fig. 4 shows the detail of Fig. 3 indicated by IV on an enlarged scale and in section.

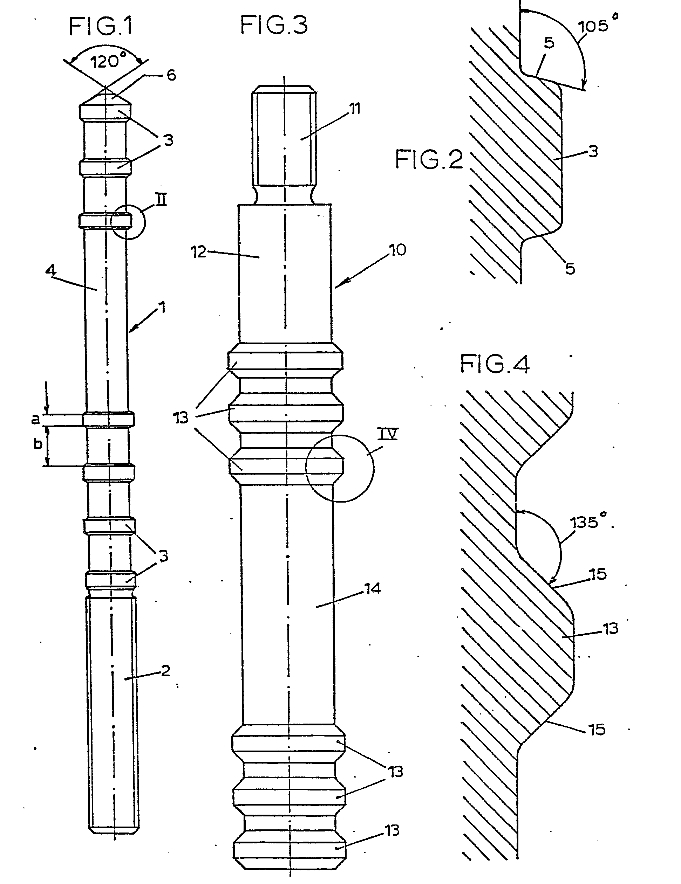

The anchoring fastener 1 according to Fig. 1 comprises a shank, having an end 2 provided with exterior screw thread, whereby a building structural part may be connected to a structure in concrete or masonry. The remainder of the fastener shank is adapted to be fixed by adhesive in the carrier material, namely concrete or a different stonelike material. This portion comprises collars 3 and in the embodiment shown three collars have been provided equispaced at the end of the shank remote from the screw threaded end, while four collars have been provided in the portion adjacent to the screw threaded portion.

Each collar 3 has an axial length a, the spacing between two successive collars having a length b. The ratio between a and b is such that a:b equals the ratio of the shear strength of the adhesive layer to the shear strength of the shank material.

If the fastener shank has a circular cross-section then usually for connecting the fastener to concrete a hole is drilled in the concrete, having a diameter which is 2 mms larger than the collar circumference. Preferably the collar extends through 1 mm beyond the portions of the shank situated between the collars, i.e. that the collars likewise have a diameter which is 2 mms larger than the intermediate shank portions.

It appears from Fig. 1 that the last collar 3, as seen in the direction from the screw threaded portion 2 and the last collar, 3, as seen in the direction from the other shank end, have a larger mutual spacing than the other collars. The reason thereof is that, as said above, thereby creep in the adhesive layer is absorbed by the long intermediate piece of adhesive layer.

Preferably the lateral sides 5 (Fig. 2) of the collars are shaped such that they include an angle of 105° with the adjacent shank periphery. The radius between a lateral collar side and a smooth intermediate portion of the shank is 3 mms, as well as the radius between a lateral collar side and the collar periphery.

In order to prevent the trapping of air when the fastener is inserted in a hole, filled with adhesive, in the embodiment shown, the inserting end of the fastener, situated remote from the screw threaded end 2, comprises a conical bevel 6, having a top angle of about 120°. The fastener shank may be manufactured from stainless steel, from a different material, which is protected against corrosion by means of a covering layer, or from synthetic material (plastic).

For a recessed connection of the structural part to the anchoring fastener, the fastener may be provided with interior screw thread instead of with exterior screw thread 2. The length and the diameter of the fastener and the number of collars are adapted to the carrier material and to the load to be carried.

Experiments have shown that the adhesively fixed anchoring fasteners according to the invention have a 80% larger holding force than the known adhesively fixed anchoring fasteners.

The anchoring fastener 10 according to Fig. 3 is adapted to be adhesively fixed in a concrete sleeper for railway rails. A fastener for fixing rails to sleepers is known per se e.g. from DE—A— 2 453 713, but has the screw-threaded shank as mentioned above with respect to anchoring fasteners in general, e.g. for securing building parts to concrete. The fastener 10 according to the invention comprises at the upper end a portion 11 provided with screw thread which merges through a radius with a smooth portion 12 situated below the first portion. The fastener comprises, as in the first embodiment, collars 13 and a smooth portion 14. The fastener is fixed by adhesive in a hole in the concrete such that the portions 12 and 11 project above the hole. First around the portion 12 a washer (not shown) is placed which then rests on the concrete surface, on that washer a portion (not shown) of the rail carriage is placed, on which carriage the rail is secured. Said carriage portion has a hole, which fits around the portion 12. Thereafter a nut is screwed on the portion 11 of the anchoring fastener, whereby the carriage is secured.

Since such a fastener is loaded mainly by dynamic transverse forces, and practically not by tension loads, the bevel angle of the lateral collar side is adapted thereto. Said lateral collar sides e.g. include an angle of 135° with the adjacent shank periphery. Thereby the load imparted to the fastener is transmitted in the most favourable manner to the adhesive layer.

Fig. 4 shows that the bevelled sides 15 of the collars 13 merge with suitable radiusses with the outer periphery of the collar and with the adjacent smooth shank portions.

**Claims**

1. An anchoring fastener adapted to be connected to a carrier material, e.g. concrete, a different stone-like material or wood, by means of a two-component adhesive, said fastener comprising a shank (1) having a plurality of circumferential collars (3, 13) with lateral sides parallel to the shank, characterized in that the lateral sides of the collars (3, 13) are connected to the shank (1) by portions (5, 15) extending at an obtuse angle with the adjacent shank periphery and merging through a radius with the collar periphery and with the shank periphery, a group of collars (3) being provided at each end of the shank portion which is to be fixed by the adhesive, the spacing between the innermost collars of said respective groups being greater than the spacing between successive collars in said groups.

2. A fastener according to claim 1, characterized in that the ratio of the axial length (a) of the circumferential collar (3) to the axial length (b) of the shank portion between two successive collars equals the ratio of the shear strength of the adhesive layer to the shear strength of the shank material.

3. A fastener according to claim 2, characterized in that the collar (3) extends along a distance of about 1 mm beyond the shank periphery.

4. A fastener according to claim 2 or 3, characterized in that the lateral sides (5) of the collars (3) include an angle of 105° with the adjacent shank periphery.

5. A fastener according to claim 1, particularly a rail fastener, characterized in that the lateral sides (15) of the collars (13) include an angle of 135° with the adjacent shank periphery.

6. A fastener according to one or more of the claims 2—4, characterized in that the radius between the collar periphery and the lateral collar side, as well as between the lateral collar side and the shank periphery is 0.3 mm.

## Patentansprüche

1. Verankerungsmittel geeignet für Verbindung mit einem Trägermaterial, zum beispiel Beton, ein anderes steinartiges Material oder Holz, mittels eines Zweikomponentenleims, welches Verankerungsmittel besteht aus einem Schaft (1) versehen mit einer Anzahl Umfangsschultern (3, 13) mit parallel zum Schaft verlaufenden Seiten, dadurch gekennzeichnet, dass die Seiten der Schultern (3, 13) mit dem Schaft (1) verbunden sind mittels Teile (5, 15), welche unter einem stumpfen Winkel mit dem angrenzenden Schaftumfang verlaufen und über einen Radius in den Schulterumfang und in den Schaftumfang übergehen, bei welchem eine Gruppe von Schultern (3) an jedem Ende des Schaftteils, welcher mittels des Leims zu befestigen ist, vorgesehen ist, derart dass der Abstand zwischen den innersten Schultern der betreffenden Gruppen grösser ist als der Abstand zwischen darauffolgenden Schultern in jener Gruppe.

2. Befestigungsmittel nach Anspruch 1, dadurch gekennzeichnet, dass das Verhältnis der axialen Länge (a) des Umfangsschulters (3) zur axialen Länge (b) des Schaftteils zwischen zwei aufeinander folgenden Schultern dem Verhältnis der Schubfestigkeit der Leimschicht zur Schubfestigkeit des Schaftmaterials entspricht.

3. Befestigungsmittel nach Anspruch 2, dadurch gekennzeichnet dass die Schulter (3) in einem Abstand von ungefähr 1 mm vom Schaftumfang vorragt.

4. Befestigungsmittel nach Anspruch 2 oder 3, dadurch gekennzeichnet, dass die Seiten (5) der Schultern (3) einen Winkel von 105° mit dem angrenzenden Schaftumfang bilden.

5. Befestigungsmittel nach Anspruch 1, insbesondere ein Schienenbefestigungsmittel, dadurch gekennzeichnet dass die Seiten (15) der Schultern (13) Winkel von 135° mit dem angrenzenden Schaftumfang bilden.

6. Befestigungsmittel nach einem oder mehreren der Ansprüche 2—4, dadurch gekennzeichnet dass der Radius zwischen dem Schulterumfang und der Schulterseite, sowie zwischen dem Schulterseite und dem Schulterumfang 0.3 mm beträgt.

## Revendications

1. Elément d'ancrage destiné à être relié materiau porteur, par exemple du béton, un autre materiau pierreux ou du bois, au moyen d'un adhésif à deux composantes, ledit élément comprenant une tige (1) ayant un nombre de collets (3, 13) périphéraux avec des côtés parallels à la tige, caractérisé en ce que les côtés des collets (3, 13) sont reliés à la tige (1) au moyen de parties (5, 15) s'étendant selon un angle obtus avec la périphérie adjacente de la tige et passant vers la périphérie du collet et vers la périphérie de la tige au moyen d'un rayon, un groupe de collets (3) étant prevu à chaque extrémité de la partie de la tige destinée à être fixée au moyen de l'adhésif, la distance entre les collets intérieurs desdits groupes respectifs étant supérieure à la distance entre les collets successifs desdits groupes.

2. Elément selon la revendication 1, caractérisé en ce que le rapport de la longueur axiale (a) du collet (3) périphéral avec la longueur axiale (b) de la partie de la tige entre des collets successifs est égal au rapport de la résistance au cisaillement de la couche d'adhésif avec la résistance au cisaillement du materiau de la tige.

3. Elément selon la revendication 2, caractérisé en ce que le collet (3) dépasse avec une distance de 1 mm environ la périphérie de la tige.

4. Elément selon la revendication 2 ou 3, caractérisé en ce que les côtés (5) des collets (6) enferment un angle de 105° avec la périphérie adjacente de la tige.

5. Elément selon la revendication 1, en particuliér un élément de fixage pour un rail, caractérisé en ce que les côtés (15) des collets (13) enferment un angle de 135° avec la périphérie adjacente de la tige.

6. Elément selon une ou plusieurs des revendications 2—4, caractérisé en ce que le rayon entre la périphérie d'un collet et le côté du collet, ainsi que entre le côté du collet et la périphérie de la tige est 0.3 mm.

FIG.1

120°

6

3

II

4

1

a

b

3

3

2

FIG.3

11

12

10

13

IV

14

13

13

13

FIG.2

105°

5

3

5

FIG.4

135°

15

13

15